# NOUVEAU FASCICULE DE BREVET EUROPEEN

(11) **EP 2 237 987 B2**
(45) Date de publication et mention de la décision concernant l'opposition: **20.10.2021**
(45) Mention de la délivrance du brevet: 31.07.2013
(21) Numéro de dépôt: 08865295.3
(22) Date de dépôt: 08.12.2008
(51) Int. Cl.: B60N 2/42, B60N 2/427

(54) **DISPOSITIF ET ENSEMBLE D'ABSORPTION D'ÉNERGIE RENFORCÉS**
VERSTÄRKTE ENERGIEAUFNEHMENDE VORRICHTUNG UND KONSTRUKTION
REINFORCED ENERGY ABSORPTION DEVICE AND ASSEMBLY

(30) Priorité: 11.12.2007 FR 0708627
(43) Date de publication de la demande: 13.10.2010
(73) Titulaire: Faurecia Sièges d'automobile, 92000 Nanterre (FR)
(72) Inventeur: MEGHIRA, Julien, 94110 Arcueil (FR); CANTELEUX, Joël, 28320 Gallardon (FR); BEQUET, Pierre, 91740 Pussay (FR); PIGNAUD, Serge, 91190 Gif-sur-Yvette (FR)
(74) Mandataire: Plasseraud IP
(86) Numéro de dépôt international: PCT/FR2008/052249
(87) Numéro de publication internationale: WO 2009/080973

(56) Documents cités:
- EP-A2- 0 709 249
- EP-A2- 0 895 307
- EP-A2- 1 547 857
- DE-A1- 19 807 581
- DE-A1- 19 807 581
- DE-A1-102004 032 785
- DE-A1-102005 019 078
- DE-A1-102006 003 651
- DE-A1-102006 003 651
- GB-A- 2 255 151
- GB-A- 2 255 151
- US-A1- 2004 061 364

## Description

L'invention concerne un dispositif d'absorption d'énergie par déformation en particulier pour siège de véhicule automobile en cas de choc et une ensemble comprenant deux dispositifs d'absorption d'énergie.

Plus précisément l'invention concerne un dispositif d'absorption d'énergie du type comprenant :
- une plaque d'épaisseur sensiblement constante comportant au moins une première découpe et une deuxième découpe séparées par un pontet, et
- une tige s'étendant à travers la première découpe.

Un dispositif d'absorption d'énergie de ce type est usuellement connu et notamment divulgué dans le document US2004/0061364.

DE 10 2004 032 785 décrit un dispositif selon le préambule de la revendication 1.

L'invention vise à réduire le coût et à améliorer la robustesse de ce type dispositif d'absorption.

Pour ce faire, conformément à l'invention, le pontet comporte en bordure d'au moins l'une des découpes un collet présentant au moins localement une épaisseur supérieure à l'épaisseur de la plaque, la tige étant apte à déformer le ponter jusqu'à sa rupture.

On comprendra par collet une zone de matière recourbée, ici une zone de la matière de la plaque. Ainsi, la plaque est renforcée au niveau du collet, et par conséquent son épaisseur peut être réduite. Le coût matière est ainsi réduit, de même que le poids du dispositif. En outre, ladite plaque peut localement servir pour le dispositif d'absorption d'énergie et plus globalement constituer un flasque de structure de siège sans engendrer un coût matière ou un poids important du siège.

Selon une caractéristique complémentaire, de préférence le collet est annulaire et borde la première découpe. deux sous l'action d'une même contrainte s'exerçant entre le premier élément et le deuxième élément.

Ainsi, l'énergie à absorber lors du choc peut être répartie afin de réduire l'épaisseur de la plaque de chaque dispositif d'absorption d'énergie.

Selon une caractéristique complémentaire, l'ensemble d'absorption d'énergie présente avantageusement les caractéristiques suivantes :
- le deuxième dispositif d'absorption d'énergie comprend également une tige et une plaque, la plaque comprenant au moins une première découpe et une deuxième découpe séparées par un pontet, la tige s'étendant à travers la première découpe,
- pour chaque dispositif d'absorption d'énergie, la tige et la plaque sont solidaires pour l'un du premier élément et pour l'autre du deuxième élément,
- le pontet du premier dispositif d'absorption d'énergie s'oppose à la rotation du deuxième élément par rapport au premier élément autour de l'axe de la tige du deuxième dispositif d'absorption d'énergie dans un sens absorption d'énergie, et
- le pontet du deuxième dispositif d'absorption d'énergie s'oppose à la rotation du deuxième élément par rapport au premier élément autour de l'axe de la tige du premier dispositif d'absorption d'énergie également dans le sens absorption d'énergie.

Selon une autre caractéristique complémentaire conforme à l'invention, le premier dispositif d'absorption d'énergie et le deuxième dispositif d'absorption d'énergie sont de préférence adaptés pour que le pontet du deuxième dispositif d'absorption d'énergie se rompe avant le pontet du premier dispositif d'absorption d'énergie.

L'absorption d'énergie est ainsi plus constante et mieux maitrisée, surtout lorsque les pontets comprennent une fente.

D'autres caractéristiques et avantages de la présente invention apparaîtront dans la description détaillée suivante, se référant aux dessins annexés dans lesquels :
- la figure 1 illustre un ensemble d'absorption d'énergie conforme à l'invention,
- la figure 2 est une vue à échelle agrandie de la zone repérée II à la figure 1, avant choc,
- la figure 3 est une vue en coupe suivant la ligne repérée III-III à la figure 2,
- la figure 4 illustre l'ensemble d'absorption d'énergie conformément à la figure 2, en cours d'absorption du choc,
- la figure 5 illustre l'ensemble d'absorption d'énergie conformément à la figure 2, en fin d'absorption du choc,
- la figure 6 illustre une variante d'ensemble d'absorption d'énergie, hors du cadre de l'invention.

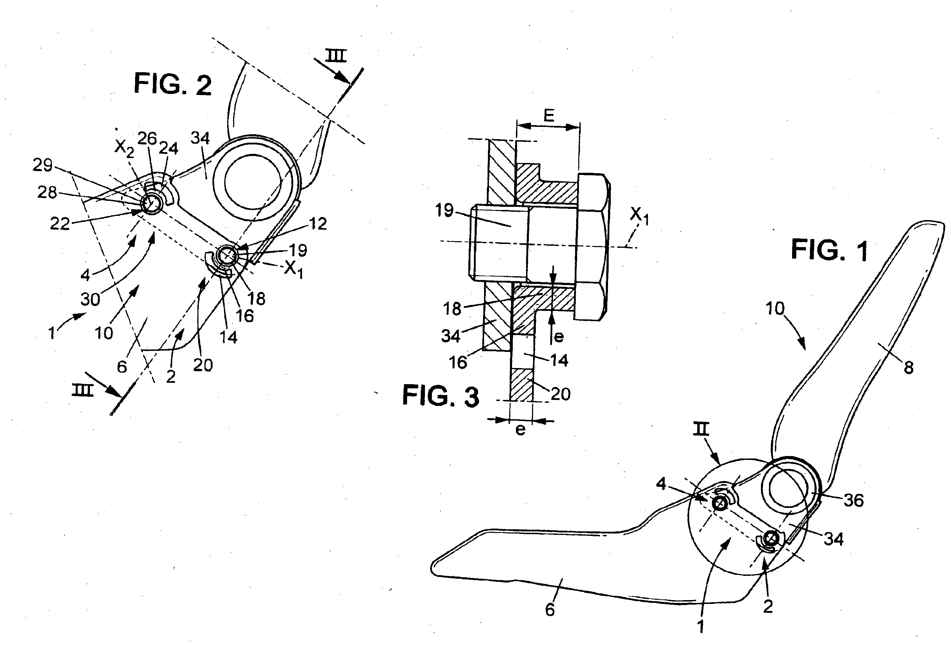

Les figures 1 à 5 illustrent un siège 10 pour véhicule automobile comprenant, à chacune de ses extrémités latérales, un flasque de structure d'assise 6, un flasque de structure de dossier 8, un flasque formant adaptateur 34 relié au flasque de structure de dossier 8 par une articulation 36 et un ensemble d'absorption d'énergie 1 interposé entre l'adaptateur 34 et le flasque de structure d'assise 6.
(dans le sens horaire également) autour de l'axe X₂ de la tige 29 du deuxième dispositif d'absorption d'énergie 4.

La forme de la deuxième découpe 14, 24 de chaque dispositif d'absorption d'énergie 2, 4 est telle que le pontet 16, 26 est plus étroit à chacune de ses extrémités, créant ainsi une amorce de rupture à chaque extrémité du pontet 16, 26, ce qui améliore le niveau d'effort et la reproductibilité (constance de résultat pour une série de dispositifs).

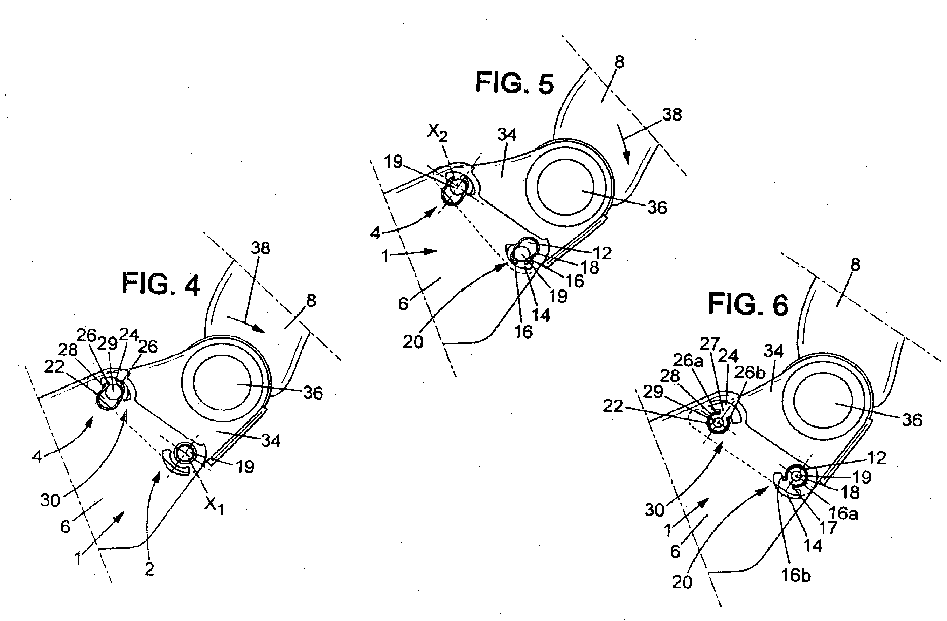

La figure 6 illustre une variante de réalisation hors du cadre de l'invention, se distinguant du mode de réalisation illustré aux figures 1 à 5 en ce que le pontet du premier dispositif d'absorption d'énergie 2 et le pontet du deuxième dispositif d'absorption d'énergie 4 séparant la première découpe 12, 22 de la deuxième découpe 14, 24 comprennent deux portions 16a, 16b ; 26a, 26b séparés par une fente 17, 27 reliant la première découpe 12, 22 à la deuxième découpe 14, 24.

La fente 17, 27 étant sensiblement plus étroite que la tige 19, 29, le déplacement de la tige 19, 29 du premier dispositif d'absorption d'énergie 2 et du deuxième dispositif d'absorption d'énergie 4 engendre la déformation des portions 16a, 16b ; 26a, 26b des pontets de manière similaire à ce qui a été décrit en relation avec les figures 4 et 5.

De préférence, la fente 17, 27 présente une largeur inférieure à la moitié du diamètre de la tige 19, 29.

Ainsi, pour une tige 19, 29 de 12 millimètres de diamètre, la fente présente une largeur de préférence comprise entre 2 millimètres et 6 millimètres.

Le positionnement d'une fente 17, 27 tangentiellement au déplacement d'une tige 19, 29 par rotation autour de l'axe X₁, X₂ de l'autre tige favorise la rotation de l'adaptateur 34 et de la structure de dossier 8 autour de l'axe de l'autre dispositif d'absorption d'énergie.

## Revendications

1. Dispositif d'absorption d'énergie (2) par déformation en particulier pour siège (10) de véhicule automobile en cas de choc, le dispositif d'absorption d'énergie (2) comprenant :
- une plaque (20) d'épaisseur (e) sensiblement constante comportant au moins une première découpe (12) et une deuxième découpe (14) séparées par un pontet (16), et
- une tige (19) s'étendant à travers la première découpe (14),
le pontet (16) comportant en bordure d'au moins l'une des découpes un collet (18) présentant au moins localement une épaisseur (E) supérieure à l'épaisseur (e) de la plaque (20), **caractérisé en ce que** la tige est apte à déformer le pontet (16) jusqu'à sa rupture.

2. Dispositif d'absorption d'énergie selon la revendication 1, dans lequel le collet (18) est annulaire et borde la première découpe (12).

3. Dispositif d'absorption d'énergie selon la revendication 1 ou la revendication 2, dans lequel le collet (18) s'étend sensiblement perpendiculairement à l'essentiel de la plaque et augmente localement l'épaisseur (e) de ladite plaque de 100% à 200%.

4. Dispositif d'absorption d'énergie selon la revendication 3, dans lequel pour l'essentiel l'épaisseur (e) de la plaque (20) est comprise entre 1,5 millimètres et 2,5 millimètres et le pontet (18) présente une épaisseur (E) comprise entre 3 millimètres et 6 millimètres.

5. Dispositif d'absorption d'énergie selon l'une quelconque des revendications précédentes, dans lequel la plaque (20) présente une augmentation de dureté par écrouissage au niveau du collet (18).

6. Ensemble d'absorption d'énergie (1) comprenant un premier dispositif d'absorption d'énergie (2) selon l'une quelconque des revendications 1 à 5 et un deuxième dispositif d'absorption d'énergie (4), destinés tous deux à être interposés entre un premier élément (6) et un deuxième élément (8) afin de les maintenir l'un par rapport à l'autre en absorbant des contraintes élevées exercées entre lesdits premier élément (6) et deuxième élément (8), ledit premier dispositif d'absorption d'énergie (2) et ledit deuxième dispositif d'absorption d'énergie (4) étant distants l'un de l'autre et étant adaptés pour se déformer tous les deux sous l'action d'une même contrainte s'exerçant entre le premier élément (6) et le deuxième élément (8).

7. Ensemble d'absorption d'énergie (1) selon la revendication 6, dans lequel :
- le deuxième dispositif d'absorption d'énergie (4) comprend également une tige (29) et une plaque (30), la plaque (30) comprenant au moins une première découpe (22) et une deuxième découpe (24) séparées par un pontet (26), la tige (29) s'étendant à travers la première découpe (22),
- la tige (29) et la plaque (30) sont solidaires pour l'un du premier élément (6) et pour l'autre du deuxième élément (8),
- le pontet (18) du premier dispositif d'absorption d'énergie (4) s'oppose à la rotation du deuxième élément (8) par rapport au premier élément (6) autour de l'axe (X) de la tige (29) du deuxième dispositif d'absorption d'énergie (4) dans un sens absorption d'énergie (32), et
- le pontet (28) du deuxième dispositif d'absorption d'énergie (4) s'oppose à la rotation du deuxième élément (8) par rapport au premier élément (6) autour de l'axe (X) de la tige (19) du premier dispositif d'absorption d'énergie (2) également dans le sens absorption d'énergie (32).

8. Ensemble d'absorption d'énergie (1) selon la revendication 7, dans lequel le premier dispositif d'absorption d'énergie (2) et le deuxième dispositif d'absorption d'énergie (4) sont adaptés pour que le pontet (28) du deuxième dispositif d'absorption d'énergie (4) se rompe avant le pontet (18) du premier dispositif d'absorption d'énergie (2).

## Patentansprüche

1. Vorrichtung zur Aufnahme von Energie (2) durch Verformung, insbesondere fair einen Sitz (10) eines Kraftfahrzeugs, im Falle eines Aufpralls, wobei die Vorrichtung zur Aufnahme von Energie (2) umfasst:
- eine Platte (20) von einer im Wesentlichen konstanten Dicke (e), welche wenigstens einen ersten Ausschnitt (12) und einen zweiten Ausschnitt (14) umfasst, welche durch eine Brücke (16) getrennt sind, und
- einen Stab (19) welcher sich durch den ersten Ausschnitt (14) erstreckt,
wobei die Brücke (16) am Rand von wenigstens einem der Ausschnitte einen Kragen (18) umfasst, welcher wenigstens lokal eine Dicke (E) aufweist, welche grösser ist als die Dicke (e) der Platte (20), **dadurch gekennzeichnet, dass** der Stab die Brücke (16) bis zum Bruch verformen kann.

2. Vorrichtung zur Aufnahme von Energie nach Anspruch 1, wobei der Kragen (18) ringförmig ist, und den ersten Ausschnitt (12) umfasst.

3. Vorrichtung zur Aufnahme von Energie nach Anspruch 1 oder Anspruch 2, wobei der Kragen (18) sich im wesentlich senkrecht zu dem Hauptteil der Platte erstreckt und lokal die Dicke (e) der Platte um 100% bis 200% erhöht.

4. Vorrichtung zur Aufnahme von Energie nach Anspruch 3, wobei für den Hauptteil die Dicke (e) der Platte (20) zwischen 1,5 Millimeter und 2,5 Millimeter beträgt, und die Brücke (18) eine Dicke zwischen 3 Millimeter und 6 Millimeter aufweist.

5. Vorrichtung zur Aufnahme von Energie nach einem der vorhergehenden Ansprüche, wobei die Platte (20) eine Härteerhöhung durch Kaltverformung im Bereich des Kragens (18) aufweist.

6. Anordnung zu Aufnahme von Energie (1) umfassend eine erste Vorrichtung zur Aufnahme von Energie (2) nach einem der Ansprüche 1 bis 5, und eine zweite Vorrichtung zur Aufnahme von Energie (4), wobei beide dazu vorgesehen sind, zwischen einem ersten Element (6) und einem zweiten Element (8) angeordnet zu sein, um sie in einer Beziehung zueinander zu halten, wenn erhöhte Beanspruchungen zwischen dem ersten Element (6) und dem zweiten Element (8) ausgeübt werden, wobei die erste Vorrichtung zur Aufnahme von Energie (2) und die zweite Vorrichtung zur Aufnahme von Energie (4) voneinander beabstandet und dazu eingerichtet sind, sich beide unter einer Beanspruchungswirkung, welche zwischen dem ersten Element (6) und dem zweiten Element (8) wirkt, zu verformen.

7. Anordnung zur Aufnahme von Energie (1) nach Anspruch 6, wobei:
- die zweite Vorrichtung zur Aufnahme von Energie (4) ebenfalls einen Stab (29) und eine Plate (30) umfasst, wobei die Platte (30) wenigstens einen ersten Ausschnitt (22) und einen zweiten Ausschnitt (24) umfasst, welche durch eine Brücke (26) getrennt sind, wobei sich der Stab (29) durch den ersten Ausschnitt (22) erstreckt,
- der Stab (29) und die Platte (30) sowohl für das erste Element (6) als auch für das zweite Element (8) benachbart sind,
- die Brücke (18) der ersten Vorrichtung zur Aufnahme von Energie (4) der Rotation des zweiten Elements (8) bezüglich des ersten Elements (6) um die Achse (X₂) des Stabs (29) der zweiten Vorrichtung zur Aufnahme von Energie (4) in einer Energieaufnahme-Richtung (32) entgegenwirkt, und
- die Brücke (28) der zweiten Vorrichtung zur Aufnahme von Energie (4) der Rotation des zweiten Elements (8) bezüglich des ersten Elements (6) um die Achse (X₁) des Stabs (19) der ersten Vorrichtung zur Aufnahme von Energie (2) ebenfalls in der Energieaufnahme-Richtung (32) entgegenwirkt.

8. Anordnung zur Aufnahme von Energie (1) nach Anspruch 7, wobei die erste Vorrichtung zur Aufnahme von Energie (2) und die zweite Vorrichtung zur Aufnahme von Energie (4) dazu eingerichtet sind, dass die Brücke (28) der zweiten Vorrichtung zur Aufnahme von Energie (4) vor der Brücke (18) der ersten Vorrichtung zur Aufnahme von Energie (2) bricht.

## Claims

1. Device (2) for absorbing energy by deformation, in particular for a motor vehicle seat (10) in the event of an impact, wherein the energy absorption device (2) comprises:
- a plate (20) of substantially constant thickness (e), featuring at least a first cut-out (12) and a second cut-out (14) separated by a bridge (16), and
- a rod (19) which extends through the first cut-out (14),
wherein the bridge (16) comprises, on the edge of at least one of the cut-outs (12), a collar (18), which has at least locally a thickness (E) which is greater than the thickness (e) of the plate (20), **characterized in that** the rod is able to deform the bridge (16) until fracture.

2. Energy absorption device according to claim 1, wherein the collar (18) is annular and is on the edge of the first cut-out (12).

3. Energy absorption device according to claim 1 or claim 2, wherein the collar (18) extends substantially perpendicularly to the main part of the plate and locally increases the thickness (e) of said plate by between 100% and 200%.

4. Energy absorption device according to claim 3, wherein the thickness (e) of the main part of the plate (20) is between 1.5 and 2.5 millimetres, and the bridge (18) has a thickness (E) of between 3 and 6 millimetres.

5. Energy absorption device according to any of the previous claims, wherein the plate (20) is work hardened at the collar (18) to increase its hardness.

6. Energy absorption assembly (1) comprising a first energy absorption device (2) according to any of claims 1 to 5 and a second energy absorption device (4), both intended to be inter-posed between a first element (6) and a second element (8) in order to hold them with respect to one another by absorbing the high stresses exerted between said first (6) and second (8) elements, wherein said first energy absorption device (2) and said second energy absorption device (4) are distant from one another and are adapted so that they both deform under the action of a same stress exerted between the first element (6) and the second element (8).

7. Energy absorption assembly (1) according to claim 6, wherein:
- the second energy absorption device (4) also has a rod (29) and a plate (30), wherein the plate (30) comprises at least a first cut-out (22) and a second cut-out (24) separated by a bridge (26), wherein the rod (29) extends through the first cut-out (22),
- the rod (29) and the plate (30) are stationary, one to the first element (6) and the other to the second element (8);
- the bridge (18) of the first energy absorption device (4) opposes the rotation of the second element (8) with respect to the first element (6) around the axis (X₂) of the rod (29) of the second energy absorption device (4) in a energy absorption direction (32), and
- the bridge (28) of the second energy absorption device (4) opposes the rotation of the second element (8) with respect to the first element (6) around the axis (X₁) of the rod (19) of the first energy absorption device (2) also in the energy absorption direction (32).

8. Energy absorption assembly (1) according to claim 7, wherein the first energy absorption device (2) and the second energy absorption device (4) are adapted so that the bridge (28) of the second energy absorption device (4) breaks before the bridge (18) of the first energy absorption device (2) breaks.
